# EUROPEAN PATENT APPLICATION

(11) **EP 4 030 258 A1**
(43) Date of publication of application: **20.07.2022**
(21) Application number: 22151456.5
(22) Date of filing: 13.01.2022
(51) Int. Cl.: G05D 16/10, G05D 16/00

(54) **PRESSURE REGULATOR**

(30) Priority: 15.01.2021 GB 202100550
(71) Applicant: Jre Precision Limited, Ashby-De-La-Zouch Leicestershire LE65 1EA (GB)
(72) Inventor: EVANS, John R, Ashby-De-La-Zouch, LE65 1EA (GB)
(74) Representative: Potter Clarkson

(57) **Abstract**

A pressure regulator (100) comprising a first stage (101) and a second stage (102) coupled in series, wherein;
the first stage has a first piston (108) comprising a first valve member arranged to face an inlet aperture and configured to control flow through the inlet aperture by way of a variable spacing therefrom based on the position of the piston, the piston biased to a normally-open position by a first spring having a first spring rate; and
the second stage has a second piston (128) comprising a second valve member (132) at an upstream end and arranged to face a second inlet aperture into the second stage and configured to control flow through the second inlet aperture by way of a variable spacing therefrom based on the position of the second piston, the second piston biased to a normally-open position by a second spring having a second spring rate lower than the first spring rate.

## Description

This invention relates to a pressure regulator. In particular, it relates to a hydrogen gas pressure regulator. The invention also relates to a fuel delivery system for a fuel cell and a fuel cell powered vehicle including said fuel delivery system.

Pressure regulators are configured to receive fluid from a fluid source and provide an output flow that has a regulated, substantially fixed pressure. In particular, the pressure of the fluid source may be variable and therefore the pressure regulator acts to smooth out variations in pressure of the fluid source so that an output flow from the regulator has a more uniform pressure.

Providing a pressure regulator having a structure that provides an output flow with a substantially fixed pressure when supplied from a fluid source that may provide a wide range of input pressures can be challenging.

According to a first aspect of the invention we provide a pressure regulator for regulating the flow of fluid from a fluid source, the pressure regulator comprising at least a first stage and a second stage coupled in series, wherein;
the first stage has an inlet aperture configured to receive fluid from the fluid source and a first stage outlet, the first stage comprising a body defining said inlet aperture at a first end and said first stage outlet at a second end, opposed the first end, and a first section and a second section therebetween, wherein a first piston is slidably mounted within the body and has an upstream end slidably mounted within the first section and a downstream end slidably mounted within the second section, wherein a flow passage provides fluid communication between the first section and the second section, and the upstream end having a first cross-sectional area and the downstream end having a second cross-sectional area, larger than the first cross-sectional area, the first piston comprising a first valve member at the upstream end and arranged to face the inlet aperture and configured to control flow through the inlet aperture by way of a variable spacing therefrom based on the position of the piston to control fluid flow between the inlet aperture and the first stage outlet, the piston biased to a normally-open position, in which the first valve member is spaced from the inlet aperture, by a first spring having a first spring rate; and
the second stage has a second inlet aperture configured to receive fluid from the first stage outlet and a second stage outlet to provide a pressure regulated flow of the fluid, the second stage comprising a second body defining said second inlet aperture at a first end and said second stage outlet at a second end, opposed the first end, and a first section and a second section therebetween, wherein a second piston is slidably mounted within the second body and has an upstream end slidably mounted within the first section and a downstream end slidably mounted within the second section, wherein a flow passage provides fluid communication between the first section and the second section, and the upstream end having a third cross-sectional area and the downstream end having a fourth cross-sectional area, larger than the third cross-sectional area, the second piston comprising a second valve member at the upstream end and arranged to face the second inlet aperture and configured to control flow through the second inlet aperture by way of a variable spacing therefrom based on the position of the second piston to control fluid flow between the second inlet aperture and the second stage outlet, the second piston biased to a normally-open position, in which the second valve member is spaced from the second inlet aperture, by a second spring having a second spring rate lower than the first spring rate.

In one or more examples, one or both of the first piston and the second piston has a flow passage therethrough providing for fluid communication between the respective first section and the respective second section of one or both of the first stage and the second stage.

In one or more examples, both the first piston and the second piston has a flow passage extending axially therethrough for fluid communication between the respective first section and the respective second section of the first stage and the second stage.

In one or more examples, the first spring is configured to bias the piston to place the first valve member in a fully open position. In one or more examples, the second spring is configured to bias the second piston to place the second valve member in a fully open position.

In one or more examples, the upstream end of one or both of the first piston and the second piston has a wider diameter portion that provides the slidable seal with the respective first section and a narrower diameter portion, the narrower diameter portion having an end that carries said respective first valve member or said respective second valve member and at least one side wall that connects to the wider diameter portion, the at least one side wall having an aperture therein that connects to the flow passage that extends through said one or both of the first piston and the second piston providing for the fluid communication between the respective first section and the respective second section.

In one or more examples, the flow passage opens into the respective second section at a point in one or both of the first piston and the second piston opposite the respective first valve member or the respective second valve member.

In one or more examples, the second inlet aperture has a diameter narrower than a diameter of the flow passage through the first piston at its exit into the second section.

In one or more examples, one or both of:
(a) the second section of the body has a wider diameter than a diameter of the first stage outlet and wherein the second section is connected to the first stage outlet by a shoulder and wherein said downstream end of the first piston is configured to abut said shoulder in the normally-open position; and
(b) the second section of the second body has a wider diameter than a diameter of the second stage outlet and wherein the second section is connected to the second stage outlet by a second shoulder and wherein said downstream end of the second piston is configured to abut said second shoulder in the normally-open position.

In one or more examples, one or both of the first spring and the second spring are configured to bias the respective first and second piston in a direction the same as the direction of flow through the pressure regulator.

In one or more examples, at least in the normally-open position,
pressure at the inlet aperture when the pressure regulator is in use is configured to act over the first cross-sectional area of the upstream end to apply a force in the same direction as that applied by the first spring; and
pressure in the first stage outlet when the pressure regulator is in use is configured to act over the second cross-sectional area of the downstream end of the first piston to compress the first spring and move the first valve member towards the inlet aperture to reduce a flow area through the inlet aperture.

In one or more examples, pressure at the second inlet aperture when the pressure regulator is in use is configured to act over the first cross-sectional area of the upstream end of the second piston to apply a force in the same direction as that applied by the second spring; and pressure in the second stage outlet when the pressure regulator is in use is configured to act over the second cross-sectional area of the downstream end of the second piston to compress the second spring and move the second valve member towards the second inlet aperture to reduce a flow area through the second inlet aperture.

In one or more examples, the pressure regulator includes a one-way valve coupled to and upstream of said inlet aperture.

In one or more examples, one or both of:
a) the piston is configured such that movement of the piston in an upstream direction relative to fluid flow through the pressure regulator is configured to move the first valve member closer to the inlet aperture to restrict flow through the inlet aperture; and
b) the second piston is configured such that movement of the second piston in an upstream direction relative to fluid flow through the pressure regulator is configured to move the second valve member closer to the second inlet aperture to restrict flow through the second inlet aperture.

In one or more examples, the first valve member, at least in the normally-open position (i.e. at no flow condition), is downstream of a valve seat formed at a downstream side of the inlet aperture. In one or more examples, the second valve member, at least in the normally-open position (i.e. at no flow condition), is downstream of a valve seat formed at a downstream side of the second inlet aperture.

In one or more examples, the flow through the flow passage between the first section and the second section is uncontrolled, e.g. absent a valve member that cooperates with the flow passage to permit or restrict flow through the flow passage. Thus, the first valve member may comprise the only valve member of the first stage and the second valve member may comprise the only valve member of the second stage.

In one or more examples, the first and/or second valve member is substantially conical in shape. In one or more examples, the first and/or second valve member is configured to control flow at least when an apex of the conical first and/or second valve member projects into the respective inlet aperture or second inlet aperture.

In one or more examples, the diameter of the flow passage through the first and/or second piston has a smaller diameter than the respective first stage outlet or the respective second stage outlet.

In one or more examples, the pressure regulator comprises a hydrogen pressure regulator.

According to a second aspect of the disclosure, we provide a fuel delivery system for a fuel consuming device comprising the pressure regulator of any preceding claim, wherein the inlet aperture is configured to be coupled to a pressurized fuel source and the second stage outlet is configured to be coupled to the fuel consuming device, the pressure regulator configured to provide a fixed output pressure for said fuel consuming device.

In one or more examples, the fuel consuming device may be a fuel cell based hybrid, an aeroengine, an internal combustion engines, a domestic hydrogen delivery system and any other device that consumes a gaseous fuel.

According to a third aspect of the disclosure, we provide fuel cell powered vehicle comprising the fuel delivery system of the second aspect.

According to fourth aspect we provide only one of the stages of the pressure regulator of the first aspect.

According to a fifth aspect we provide a pressure regulator comprising a first stage and a second stage coupled in series, wherein;
the first stage has a first piston comprising a first valve member arranged to face an inlet aperture and configured to control flow through the inlet aperture by way of a variable spacing therefrom based on the position of the piston, the piston biased to a normally-open position by a first spring having a first spring rate; and
the second stage has a second piston comprising a second valve member at an upstream end and arranged to face a second inlet aperture into the second stage and configured to control flow through the second inlet aperture by way of a variable spacing therefrom based on the position of the second piston, the second piston biased to a normally-open position by a second spring having a second spring rate lower than the first spring rate.

The optional features of the first aspect apply equally to the fourth and fifth aspects.

There now follows, by way of example only, a detailed description of embodiments of the invention with reference to the following figures, in which:
Figure 1 shows an example cross-sectional view of an embodiment of the pressure regulator;
Figure 2 shows a first view of an example first and/or second piston;
Figure 3 shows a second view of the example first and/or second piston of Figure 2; and
Figure 4 shows an example fuel delivery system and vehicle.

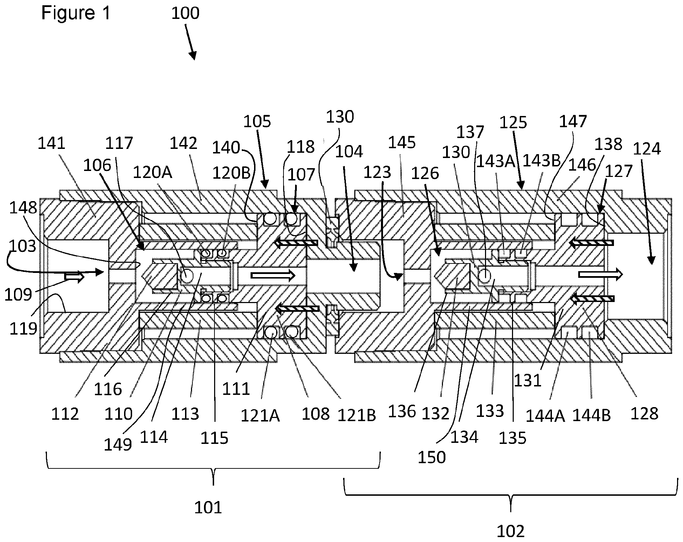

Figure 1 shows an example pressure regulator 100. The pressure regulator 100, in this example, comprises a pressure regulator suitable for regulating the pressure of a hydrogen gas supply. However, it will be appreciated that the pressure regulator 100 may be configured to operate with other gases and/or fluids.

The pressure regulator has particular application where large pressure differences are present between the gas supply pressure and the desired output pressure of the regulator. For example, a ratio of x:y where x may be at least 10, at least 50 or at least 70 and y may be 1. The pressure regulator 100 also has application in hybrid (e.g. diesel/petroleum hydrogen hybrids) and hydrogen-powered vehicles. The pressure regulator 100 also has application in gas fuelling stations and storage skids, aeroplane engines and other gas handling installations. For use with hydrogen, the regulator 100 may have bodies, seats and seals formed of appropriate materials.

The pressure regulator 100 is configured to receive a fluid flow from a fluid source coupled to the regulator that delivers fluid to its inlet aperture 103 and provide a fluid flow having a regulated, substantially fixed output pressure at its outlet 124.

The pressure regulator 100 comprises a first stage 101 and a second stage 102 coupled in series. It will be appreciated that, in other examples, more than two stages may be provided. Each stage 101, 102 may comprise a pressure regulating arrangement and the provision of several stages in series may provide for stepping down of the pressure from the fluid source from the first stage 101 to the second stage 102. The interaction between pressure regulating arrangements of the first stage and the second stage has also been found to provide for improved performance. Further, the advantageous performance may be provided by the configuration enabling back pressure created by the second stage 102, when it controls the flow through the second stage 102, being configured to act on a piston of the first stage 102 to move it in a direction opposed to flow and thereby reduce flow through the first stage 101. This particularly applies where a substantial difference is required between the input pressure and the output pressure. The series arrangement may be such that the output from the first stage 101 may be provided directly to an input of the second stage 102 and the output of the second stage 102 may be provided to an outlet or directly to a subsequent stage, if present, and so on.

Figure 1 shows a cross-section through the substantially cylindrical pressure regulator 100. Accordingly, the cross-section of the components in a direction orthogonal to the view of figure 1 (into and out of the page) is substantially circular. It will, however, be appreciated that other cross-sectional shapes are possible. However, for ease of description, a cylindrical pressure regulator will be described. Also, in this example, the average direction of flow in the first stage is substantially the same as the average direction of flow through the second stage. The pressure regulator may be sized to obtain a desired flow rate and in one or more examples may have an outside diameter of 30mm or 40mm.

The first stage 101 and the second stage 102 may be separate parts that are coupled together to form the pressure regulator 100. A first stage outlet 104 may thus be coupled to an inlet aperture of the second stage 102. The first stage 101 and the second stage 102 may have complimentary parts of screw threaded connection for providing the coupling therebetween. Other means of coupling may be provided or the first and second stages may integral with one another. A seal 130 may be provided between the stages 101, 102. The seal 130, in this example, comprises a ring seal having a plurality of sealing ridges. A first, inner sealing ridge, which is rounded, and a second, outer sealing ridge, which is of rectangular cross-section is provided between the first and second stages. One or both of the first stage 101 and the second stage 102 may have a recess in which to retain the seal 130. In this example, a recess is provided in only the second stage 102 to seat the seal 130.

The first stage 101 and the second stage 102 are substantially similar in construction and will be described in turn including the differences therebetween.

The first stage 101 has an inlet aperture 103 configured to receive fluid from the fluid source, as shown by direction-of-flow arrow 109. Further unshaded and unlabelled direction-of-flow arrows are shown to aid understanding. The first stage 101 has a first stage outlet 104 which, as described above, couples to the inlet of the second stage 102.

The first stage 101 comprises a body 105 defining said inlet aperture 103 at a first end, i.e. the inlet end. The body 105 may further define a port 119 around the inlet aperture 103 to which a hose, pipe or fluid source may couple. The body 105 further defines said first stage outlet 104 at a second end (i.e. the outlet end), opposed the first end (e.g. at an opposite end of a flow path through the first stage 101). In this example, the inlet aperture 103 and the aperture that forms the first stage outlet 104 may be in-line and may be aligned along a longitudinal axis of the pressure regulator 100.

The body 105 also defines a first section 106 and a second section 107. Thus, in this example and in the direction of fluid flow, the body 105 defines the inlet aperture 103, which opens into the first section 106. The body 105 then defines the second section 107, which has a wider diameter than the first section 106 and then the first stage outlet 104.

A first piston 108 having an upstream end 110 and a downstream end 111 is mounted within the body 105 such that the first piston 108 may slide therein. The upstream end 110 is mounted in the body closer to the inlet aperture 103 and the downstream end 111 is mounted in the body 105 further from the inlet aperture 103. In particular, the upstream end 110 is slidably mounted within the first section 106 and the downstream end 111 is slidably mounted within the second section 107. The first section 106 thus provides a bore in which the upstream end 110 may slide and the second section 107 thus provides a bore in which the downstream end 111 may slide. The piston is rigid and thus the upstream and downstream ends are in fixed physical relation with one another. The first piston 108 slidably seals against walls of the first and second sections 106. In this example, the piston 108 includes one or more seals 120A, 120B (e.g. ring seals) at the upstream end 110 that slidably seal against the first section 106 of the body 105. Further, the first piston 108 includes one or more seals 121A, 121B (e.g. ring seals) at the downstream end 111 that slidably seal against the second section 107 of the body 105. The one or more seals 120A, 120B and one or more seals 121A, 121B are carried in respective grooves at the upstream end 110 and the downstream end 111.

In other examples, the seals may be mounted in the walls of the first and/or second sections 106, 107. In other examples, seals other than said ring seals 120A, 120B, 121A, 121B may provide said slidably, sealed, relation between the piston 108 and the first and second sections 106, 107.

The first piston 108 comprises a first valve member 112 at the upstream end which is arranged to face a downstream side of the inlet aperture 103. The downstream side of the inlet aperture 103 therefore comprises a valve seat 148. Given the slidable nature of the piston 108, the first valve member 112 is configured to slide towards and away from the valve seat 148 of the inlet aperture 103. Thus, with the first piston 108 slid towards the inlet aperture 103, the first valve member 112 is configured to sit against the valve seat 148 and close the inlet aperture 103. With the first piston 108 slid away from the inlet aperture 103, the first valve member 112 may adopt a variable spacing therefrom based on the position of the piston 108 to permit fluid flow between the inlet aperture 103 and the first stage outlet 104 and control the effective flow area between the valve seat 148 and the first valve member 112.

The piston 108 is biased to a normally-open position, in which the first valve member 112 is spaced from the inlet aperture 103 / valve seat 148, thereby permitting fluid flow, by a first spring 113 having a first spring rate. The first spring 113 may be mounted radially outwardly of the upstream end 110 and bear against a surface of the body 105 at one end and a shoulder 140 at the other, wherein the shoulder 140 comprises a radially extending surface that extends between the narrower diameter upstream end 110 and the wider diameter downstream end 111 of the piston 108.

The upstream end 110 has a first pressure receiving area, i.e. equivalent to a first cross-sectional area, that is presented to pressure from the inlet aperture 103. The downstream end 111 has a second pressure receiving area, i.e. equivalent to a second cross-sectional area, that is presented to pressure that is present at the first stage outlet 104 / second section107. The second pressure receiving area is larger than the first pressure receiving area.

The body 105, in this example, is formed of two parts; a first body part 141 and a second body part 142. The first body part 141 and the second body part 142 couple together and define an internal chamber in which to retain the first piston 108 and the first spring 113. The first body part 141 includes said port 119 and an aperture in the first body part 141 defines the inlet aperture 103 and valve seat 148. The first body part 141 includes a tubular extension 149 that extends from around the first inlet aperture 103 / valve seat 148 and defines the first section 106. The second body part 142 is configured to engage with the first body part 141 around the port 119 and defines the second section 107 and the first stage outlet 104. The second body part 142 receives the tubular extension therein. The first spring 113 is received around the tubular extension 149 and between the tubular extension and the second body part 142 and thus the tubular extension may also act as a guide for the first spring 113.

We will now describe the second stage 102. The second stage is substantially similar to the first stage 101 except that the spring of the second stage 102 has a different spring rate. Accordingly, the structure and function described above in relation to the first stage may apply equally to the second stage 102 unless otherwise stated.

The second stage 102 has a second inlet aperture 123 configured to receive fluid from the first stage outlet 104 and a second stage outlet 124 to provide a pressure regulated flow. The second stage 102 comprises a second body 125 defining said second inlet aperture 123 at a first end (upstream end) and said second stage outlet 124 at a second end (downstream end), opposed the first end (e.g. at an opposite end of a flow path through the second stage 102).

The second body 125 similarly defines a first section 126 having a narrower diameter and a second section 127 having a wider diameter between the second inlet aperture 123 and the second stage outlet 124.

A second piston 128, similar to the first piston 108, is slidably mounted within the second body 125 and has an upstream end 130 complementary to said first section 126 and slidably mounted within the first section 126 and a downstream end 131 complementary to said second section 127 and slidably mounted within the second section 127. Similarly, the upstream end 130 may carry one or more seals 143A and 143B to provide the slidable and sealed mounting of the upstream end 130 in the first section 126. Likewise, the downstream end 131 may carry one or more seals 144A and 144B to provide the slidable and sealed mounting of the downstream end 131 in the second section 127. As before, different sealing arrangements may be provided. The upstream and downstream ends have a fixed physical relation with one another.

The upstream end 130 has a third pressure receiving area, i.e. equivalent to a third cross-sectional area, that is presented to pressure from the second inlet aperture 123. The downstream end 131 has a fourth pressure receiving area, i.e. equivalent to a fourth cross-sectional area, that is presented to pressure that is present at the second stage outlet 124 / second part 127. The fourth pressure receiving area is larger than the third pressure receiving area.

In this example, the third pressure receiving area is substantially equal to the first pressure receiving area and the fourth pressure receiving area is substantially equal to the second pressure receiving area. However, in other examples, the areas may be different or the ratio between the first and second pressure receiving area and the ratio between the third and fourth pressure receiving area may be the same or different.

The second piston 128 carries a second valve member 132 at the upstream end which is arranged downstream of and to face a downstream side of the second inlet aperture 123. The downstream side of the second inlet aperture 123 defines a valve seat with which the second valve member 132 cooperates.

Based on the position of the second piston 128, the second valve member 132 is configured to close the second inlet aperture 123 to fluid flow when the piston slides towards the second inlet aperture 123 and adopt a variable spacing therefrom when the second piston 128 slides away from the second inlet aperture 123 thereby controlling an effective flow area between the valve seat and the second valve member 132.

Similarly, the second piston 128 is biased to a normally-open position, in which the second valve member 132 is spaced from the second inlet aperture 123, by a second spring 133 having a second spring rate lower than the first spring rate. The second spring 133 may be mounted radially outwardly of the upstream end 130 and bear against a surface of the body 125 at one end and a shoulder 147 at the other, wherein the shoulder 147 comprises a radially extending surface that extends between the narrower diameter upstream end 130 and the wider diameter downstream end 131.

The second body 125, in this example, is also formed of two parts; a first body part 145 and a second body part 146. The first body part 145 and the second body part 146 couple together and define an internal chamber in which to retain the second piston 128 and the second spring 133. The first body part 145 includes said port and an aperture in the first body part 145 defines the second inlet aperture 123. The first body part 145 includes a tubular extension 150 that extends from around the second inlet aperture 123 / valve seat and defines the first section 126. The second body part 146 is configured to engage with the first body part 145 around the port and defines the second section 127 and the second stage outlet 124. The second body part 146 receives the tubular extension therein. The second spring 133 is received around the tubular extension and between the tubular extension and the second body part 146 and thus the tubular extension may also act as a guide for the second spring 133.

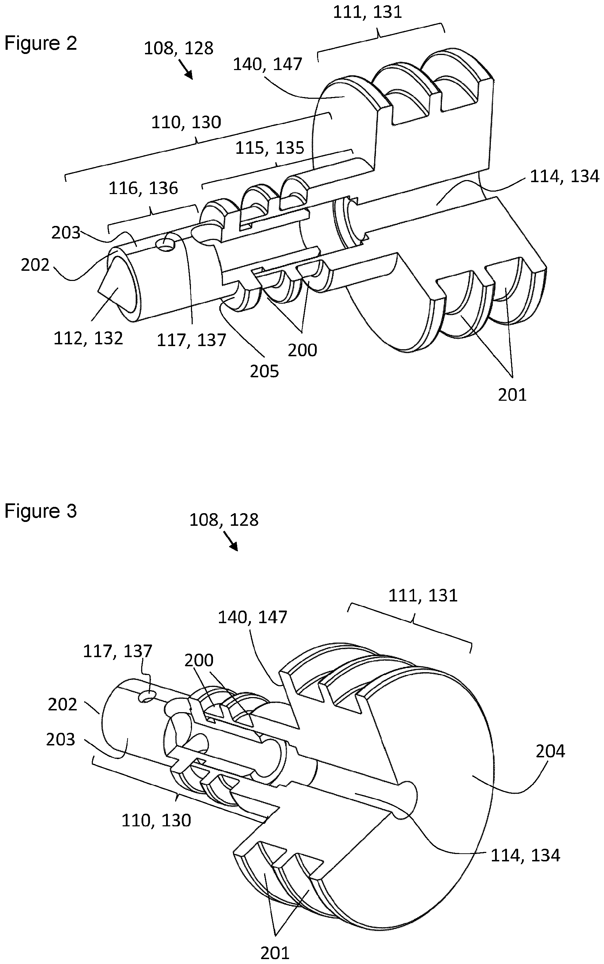

Figures 2 and 3 shows two different views of the first piston 108 or second piston 128, given that they have substantially the same structure in this embodiment.

The first piston 108 and the second piston 128 may have a flow passage 114, 134 therethrough providing for fluid communication between the respective first section 106, 126 and the respective second section 107, 127 of the first stage 101 and the second stage 102. It will be appreciated that in other examples only one of the first piston 108 and the second piston 128 may have the flow passage 114, 134. The provision of flow between the first section 106, 126 and the respective second section 107, 127 through a flow passage arranged along a centre or longitudinal axis of the piston 108, 128 may be advantageous. The central axial flow may be important to balance the axial pressure on the sealing rings 121A, 121B, 144A, 144B. This may ensure they deform as designed equally on the circumference maintaining a uniform contact pressure, which may be important at very low temperatures where due to contraction, the seal pressure can decline significantly.

It will be appreciated that the piston 108, 128 sits between the respective first section 106, 126 and the respective second section 107, 127 and therefore for there to be flow, a flow passage is required. In this example, the flow passage is through the pistons 108, 128 but in other examples a flow passage may be provided from the first section 106, 126 to the respective second section 107, 127 through the body 105, 125. In other examples, the flow passage may be through a part of the piston 108, 128 other than along the central longitudinal axis of the piston.

The upstream end 110, 130 of one or both of the first piston 108 and the second piston 128 has a wider diameter portion 115, 135 that abuts the first section 106, 126, and may carry the seals 120A, 120B, 143A, 143B, and a narrower diameter portion 116, 136. The narrower diameter portion 116, 136 is arranged upstream of the wider diameter portion 115, 135. The narrower diameter portion 116, 136 has a terminal end 202 and a side wall 203 that connects to the wider diameter portion 115, 135. The terminal end 202 carries said respective first valve member 112 or said respective second valve member 132. The terminal end 202 comprises a blind bore or cup in which to receive the respective first valve member 112 or said respective second valve member 132. The rim of the cup of the terminal end is visible in figure 2.

The first valve member and second valve member 112, 132 is substantially conical in form, in this example, and will partially project into the inlet aperture 103 or second inlet aperture 123 when the respective piston slides theretowards. It will be appreciated that the material of the first valve member and second valve member 112, 132 is selected to ensure strength whilst allowing slight deformation to ensure reliable sealing. The conical shape may be advantageous in that it provides the flow and pressure controllable range and regulation characteristics when the first valve member and second valve member 112 or 132 is projected into inlet aperture 103 or second inlet aperture 123. It may provide an equal percentage flow and pressure regulation characteristics such that, for example, a 10% travel of either member 112 or 132 to project further into inlet aperture 103 or 123 respectively will decrease the flow rate and pressure by 50%, meaning for example, at 20% travel of members 112 or 132 towards and into inlet aperture 103 or 123 the flow rate is 100m³/min, then at a 30% travel of the members 112 or 132 towards and into inlet aperture 103 or 123, the flow rate is 50 m³/min, the pressure will change relatively by a similar percentage at the given fluid properties. It has been found that the conical shape also contributes to performance and may facilitate the provision of a regulated, set outlet pressure over a wide range of inlet pressure, such as ranging from 700 to 30 bar.

In one or more other examples, the piston, at the upstream end 110, 130, may be formed of two parts. Thus, the narrower diameter portion 116, 136 including the cup that carries the valve member 112, 132, the aperture 117, 137 and a ridge to retain seal 120A, 143A may be configured to couple to the remainder of the respective piston 108, 128. The use of two parts may allow for the low temperature seals 120A/B and 143A/B can be assembled without stretching beyond their design limit.

In other examples, the first valve member and second valve member 112, 132 is substantially domed in form.

In the present example the first valve member and second valve member 112, 132 are configured, by virtue of the piston 108, 128 adopting (e.g. sliding to) a fully upstream position, effectively close the inlet aperture 103, 123.

However, in other examples, the first valve member and second valve member 112, 132 may be configured to control the effective flow area through the inlet aperture without completely closing the respective aperture. This may be achieved by limiting the distance the piston 108, 128 may slide towards the aperture 103, 123.

The side wall 203 includes a respective aperture 117, 137 therein that connects to the flow passage 114, 134 that extends through the first piston 108 and the second piston 128 providing for the fluid communication between the respective first section 106, 126 and the respective second section 107, 127.

The flow passage 114, 134 opens into the respective second section 107, 127 through an end face 204 of the larger diameter downstream end 111, 131, which is arranged opposite the respective first valve member 112 or the respective second valve member 132. The opening in the end face 204 may be arranged at the centre of the end face 204.

With reference to Figure 2, the first/third pressure receiving area is over the valve member 112, 132, the rim of the terminal end 202 and a shoulder 205 between the narrower diameter portion 116, 136 and the wider diameter portion 115, 135. This first/third pressure receiving area is substantially equal to the first/third cross-sectional area of the wider diameter portion 115, 135.

With reference to Figure 2, the second/fourth pressure receiving area is over the end face 204 and an end of the fluid passage 114,134. This second/fourth pressure receiving area is substantially equal to the second/fourth cross-sectional area of the wider diameter portion 115, 135, i.e. the area of the end face 204 including the area of the opening of the flow passage 114, 134 therethrough.

Accordingly, the pressure at the first/second stage outlet 104, 124 will act over a greater area to move the piston 108,128 upstream and to compress the spring 113, 133 than the pressure at the inlet aperture 103 and second inlet aperture 123, which acts to move the piston downstream 108,128.

The piston 108, 128 includes circumferential grooves 200 in which to receive the seals 120A, 120B, 143A, 143B. The piston 108, 128 includes circumferential grooves 201 in which to receive the seals 121A, 121B, 144A, 144B.

The diameter of the inlet aperture 103 is narrower than the diameter of the first section 106. The diameter of the aperture 117 into the flow passage is substantially equal to the diameter of the inlet aperture 103. The diameter of the outlet from the flow passage 114 is greater than the diameter of the inlet aperture 103 and the aperture 117 but narrower than the diameter of the first section 106. The diameter of the first stage outlet 104 is greater than the diameter of the outlet from the flow passage 114. The diameter of the second inlet aperture 123 is narrower than the diameter of the outlet from the flow passage 114. It will be appreciated that in other examples, such as ones in which different flow rates are required, the relative dimensions of the parts may differ.

The diameter of the second inlet aperture 123 is narrower than the diameter of the first section 126. The diameter of the aperture 137 into the flow passage of the second piston 128 is substantially equal to the diameter of the second inlet aperture 123. The diameter of the outlet from the flow passage 134 is greater than the diameter of the second inlet aperture 123 and the aperture 137 but narrower than the diameter of the first section 126. The diameter of the second stage outlet 124 is greater than the diameter of the outlet from the flow passage 134.

With reference to Figures 1 to 3, the pressure regulator 100 is biased by the first spring 113 and the second spring 133 to a normally open position. Thus, the first piston is biased in the direction of flow 109 such that the first valve member 112 is spaced downstream of the inlet aperture 103 and therefore opens the inlet aperture 103. Likewise, the second piston 128 is biased in the direction of flow 109 such that the second valve member 132 is spaced downstream of the second inlet aperture 123 and therefore opens the second inlet aperture 123. This direction of biasing may be advantageous in view of the interaction between the first and second stages 101, 102.

The second section 107 of the body 105 has a wider diameter than a diameter of the first stage outlet 104 and the second section 107 is connected to the first stage outlet 104 by a shoulder 118. Thus, in the normally open position said downstream end 111 of the first piston 108 is configured to abut said shoulder 118.

The second section 127 of the second body 125 has a wider diameter than a diameter of the second stage outlet 124 and the second section 127 is connected to the second stage outlet 124 by a second shoulder 138. Thus, in the normally open position said downstream end 131 of the second piston 128 is configured to abut said second shoulder 138.

In one or more examples, the end face 204 of one or both pistons 108, 128 may be domed to expose it to pressure from its normally open position against the shoulders 118. 138. Alternatively, the end face 204 and/or the shoulders 118, 138 may be stepped to expose it to pressure from its normally open position against the shoulders 118, 138. In other examples, the abutment of the pistons 108, 128 against the shoulders 118, 138 has not been found to isolate the whole area of the end face 204 of the piston 108, 128 from pressure in the normally open position.

When the pressure regulator 100 is coupled to a fluid source and a flow therethrough is provided, pressure at the inlet aperture 103 is configured to act over the first pressure receiving / first cross-sectional area of the upstream end 110 to apply a force in the same direction as that applied by the first spring 113 and in the direction of flow, which opens the valve formed by the inlet aperture 103 and first valve member 112. The fluid flows into the first section 106 and through aperture 117 into the flow passage 114 of the first piston 108. The flow passes into the second section 107 on exiting the flow passage 114 and into the first stage outlet 104. The pressure of the fluid in the second section 107 / first stage outlet 104 is configured to act over the second cross-sectional area of the downstream end 111 of the first piston 108 to move the piston 108 in a direction against the flow 109 and compress the first spring 113, which acts to move the first valve member 112 towards the inlet aperture 103 thereby restricting flow into the first section 106.

Likewise, when the pressure regulator 100 is coupled to a fluid source and the flow introduced at the inlet aperture 103 flows through to the second inlet aperture 123, the pressure at the second inlet aperture 123 is configured to act over the first pressure-receiving area / first cross-sectional area of the upstream end 130 to apply a force in the same direction as that applied by the second spring 133 and in the direction of flow 109, which opens the valve formed by the second inlet aperture 123 and second valve member 132. The fluid flows into the first section 126 of the second stage 102 and through aperture 137 in the second piston 128 into the flow passage 134 of the second piston 108. The flow passes into the second section 127 on exiting the flow passage 134 and into the second stage outlet 124. The pressure of the fluid in the second section 127/second stage outlet 124 is configured to act over the second cross-sectional area of the downstream end 131 of the second piston 128 to move the second piston 128 in a direction against the flow 109 and compress the second spring 133, which acts to move the second valve member 132 towards the second inlet aperture 123 thereby restricting flow into the first section 126 of the second stage.

The second spring 133 has a lower spring rate than the first spring 113 and is therefore more easily compressed by the pressure of the fluid in the second section 127/second stage outlet 124. In one or more examples, the first stage 101 may be configured to provide an output pressure of less than 2500 kPa. The second stage may then be configured to provide the desired output pressure, such as 700 kPa or between 300-3000 kPa. It will be appreciated that other pressure ranges are possible. The combination of the first and second stage 101, 102 wherein the second spring 133 has a lower spring rate than the first spring 113 has been found to provide for a surprisingly effective pressure regulator with good flat line pressure output and droop performance. Thus, the pressure regulator 100 has been found to provide a fixed regulated output flow at the second stage outlet 124 for a wide range of input pressures at the inlet aperture 103. In addition, the normally-open configuration results in both the first cross-sectional area and the second cross-sectional area being presented with pressure, which has also been found to contribute to the performance of the pressure regulator 100. A further feature that may contribute to the performance is the configuration of the regulator such that back pressure generated in the second section 107 / first stage outlet 104 by the action of the second stage 102 is configured to act to move the first piston 108 in a direction against flow 109 to reduce the effective flow area between the valve member 112 and seat 148 and thus flow through the inlet aperture 103. The fourth pressure receiving area of the second piston, in this example, is exposed to the desired outlet pressure of the regulator 100.

In summary, for a given pressure distribution upstream and downstream of the first and second piston 108, 128, the resulting pressure induced net force between the first/second piston's first pressure receiving area and second pressure receiving area, if it overcomes the force of the first / second spring 113, 133, will act to compress the first/second spring 113, 133 and move the first/second piston to a pressure force and spring force equilibrium position thus reducing the effective flow area between the first/second valve member 112, 132 and the valve seat to provide the configured flow rate and downstream pressure requirements.

In operation, the flow enters the regulator 100 at an operating inlet pressure of, for example, 70 MPa (700 Bar), at which the regulator 100 may have been pre-set for a specified outlet pressure magnitude. Both the first stage 101 and second stage 102 pistons 108, 128 will initially simultaneously move to close (or move closer to) the respective inlet apertures 103, 123 and compress the springs 113, 133 until the net pressure forces between the first/second and third/fourth pressure receiving areas are in equilibrium with the compression forces of the first and second springs 113, 133, determined by the spring rates. As the second piston 133 moves to close, it creates back pressure due to a decrease in flow area between the second valve member 132 and the second inlet aperture 123, which then increases the pressure in the first stage 101. As described above, the first stage 101 comprises a spring 113 with a higher spring rate and resisting force and the second stage spring has a much lower spring rate and resisting force.

In this dynamic process, the pressure in first stage 101 increases from the back pressure created by the second piston 128 moving to close and reducing flow through the second inlet aperture 123. This causes the valve member 112 of the first piston 108 to move to close the seat of the inlet aperture 103 reducing the effective flow area through the inlet aperture 103. This inherently reduces the pressure downstream of the first valve member 112 of the first piston 108.

The second stage 102 is then presented with the reduced pressure from the first stage 101 that was induced by the first valve member 112 acting to reduce the effective flow area through the inlet aperture 103. The second piston spring 133, having a lower spring rate and resistive force, moves in the direction of the flow 109 because the second spring 133 decompresses due to the reduced pressure from the first stage 101, and thus increases the effective flow area through the second inlet aperture 123 until the net pressure generated force between the third and fourth pressure receiving areas of the second piston 128 is in equilibrium with the force of the second spring 133, which has the second spring rate and therefore a pre-set compression force.

Both the compression forces of the first spring 113 and the second spring 133 will then come into equilibrium with the respective pressure induced net forces acting on the first/second and third/fourth pressure receiving areas at a given pressure distribution within the pressure regulator 100. The pressure regulator will therefore provide a required flow rate and set outlet pressure through each of the stages 101, 102.

The first spring rate and second spring rate may be selected and set to interact with the geometric configuration of the pressure regulator 100 to provide the resulting pressure distribution. In an embodiment, the second spring rate of the second spring 133 together with the effective flow area through the second inlet aperture 123 may provide a specific designated back pressure which, through the response of the first stage 101, facilitates the pressure and flow moderation at the second stage 102 that maintains a constant set outlet pressure and corresponding flow rate regardless of inlet pressure fluctuations or reduction in inlet pressure. This is advantageous where the fluid source is a gas storage tank, because the required pressure is maintained even when there is low gas pressure in the tank.

The droop performance, that is the ability of the pressure regulator 100 to provide a fixed output pressure for a varying inlet pressure, for the present embodiment may be high which, it is believed, is due, at least in part, to the use of two stages in which the first and second springs 113, 133 are compressed as a function of pressure induced load in the opposite direction to that of the flow.

In the present embodiments, the pressure from the fluid source may range between 700 to 40 bar at the inlet aperture and the regulator 100 may be configured to provide a constant outlet pressure of 7 bar static. Accordingly, it has been found that the regulator 100 may provide said fixed 7 bar over the wide range of 700 to 40 bar input pressure.

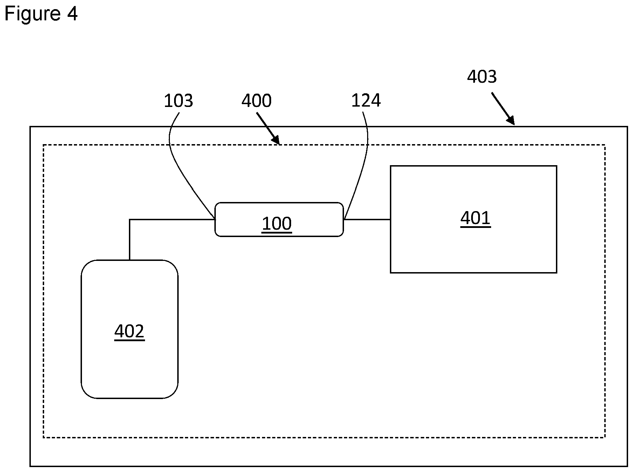

Figure 4 shows a fuel delivery system 400 for a fuel cell 401 comprising the pressure regulator 100 described above, wherein the inlet aperture 103 is configured to be coupled to a pressurized fuel source 402 and the second stage outlet 124 is configured to be coupled to the fuel cell 401, the pressure regulator 100 configured to provide a fixed output pressure for said fuel cell 401. The fuel delivery system 400 may be configured to provide power for a fuel cell powered vehicle 403.

## Claims

1. A pressure regulator (100) for regulating the flow of fluid from a fluid source, the pressure regulator comprising at least a first stage (101) and a second stage (102) coupled in series, wherein;
the first stage (101) has an inlet aperture (103) configured to receive fluid from the fluid source and a first stage outlet (104), the first stage (101) comprising a body (105) defining said inlet aperture at a first end and said first stage outlet (104) at a second end, opposed the first end, and a first section (106) and a second section (107) therebetween, wherein a first piston (108) is slidably mounted within the body (105) and has an upstream end (110) slidably mounted within the first section (106) and a downstream end (111) slidably mounted within the second section (107), wherein a flow passage provides fluid communication between the first section and the second section, and the upstream end (110) has a first cross-sectional area and the downstream end (111) has a second cross-sectional area, larger than the first cross-sectional area, the first piston (108) comprising a first valve member (112) at the upstream end and arranged to face the inlet aperture (103) and configured to control flow through the inlet aperture (103) by way of a variable spacing therefrom based on the position of the piston to control fluid flow between the inlet aperture and the first stage outlet (104), the piston (108) biased to a normally-open position, in which the first valve member (112) is spaced from the inlet aperture (103), by a first spring (113) having a first spring rate; and
the second stage (102) has a second inlet aperture (123) configured to receive fluid from the first stage outlet and a second stage outlet (124) to provide a pressure regulated flow of the fluid, the second stage (102) comprising a second body (125) defining said second inlet aperture (123) at a first end and said second stage outlet (124) at a second end, opposed the first end, and a first section (126) and a second section (127) therebetween, wherein a second piston (128) is slidably mounted within the second body (125) and has an upstream end (130) slidably mounted within the first section and a downstream end (131) slidably mounted within the second section, wherein a flow passage provides fluid communication between the first section and the second section, and the upstream end has a third cross-sectional area and the downstream end has a fourth cross-sectional area, larger than the third cross-sectional area, the second piston (128) comprising a second valve member (132) at the upstream end and arranged to face the second inlet aperture (123) and configured to control flow through the second inlet aperture by way of a variable spacing therefrom based on the position of the second piston (128) to control fluid flow between the second inlet aperture (123) and the second stage outlet (124), the second piston biased to a normally-open position, in which the second valve member is spaced from the second inlet aperture (123), by a second spring (133) having a second spring rate lower than the first spring rate.

2. The pressure regulator (100) according to claim 1, in which one or both of the first piston (108) and the second piston (128) has the flow passage (114, 134) therethrough providing for fluid communication between the respective first section (106, 126) and the respective second section (107, 127) of one or both of the first stage (101) and the second stage (102).

3. The pressure regulator (100) according to claim 1 or claim 2, in which both the first piston (108) and the second piston (128) have the flow passage (114, 134) extending axially therethrough for fluid communication between the respective first section (106, 126) and the respective second section (107,127) of the first stage (101) and the second stage (102).

4. The pressure regulator (100) according to claim 2 or 3, in which the upstream end (110, 130) of one or both of the first piston (108) and the second piston (128) has a wider diameter portion (115) that provides the slidable seal with the respective first section (106, 126) and a narrower diameter portion, (116), the narrower diameter portion having an end that carries said respective first valve member (112) or said respective second valve member (132) and at least one side wall that connects to the wider diameter portion, the at least one side wall having an aperture (117, 137) therein that connects to the flow passage (114, 134) that extends through said one or both of the first piston (108) and the second piston (128) providing for the fluid communication between the respective first section (106, 126) and the respective second section (107, 127).

5. The pressure regulator (100) according to any one of claims 2 to 4, in which the flow passage (114, 124) opens into the respective second section (107, 127) at a point in one or both of the first piston (108) and the second piston (128) opposite the respective first valve member (112) or the respective second valve member (132).

6. The pressure regulator (100) according to any of claims 2 to 5, in which the second inlet aperture (123) has a diameter narrower than a diameter of the flow passage (114) through the first piston (108) at its exit into the second section (107).

7. The pressure regulator (100) according to any preceding claim, in which one or both of:
(a) the second section (107) of the body (105) has a wider diameter than a diameter of the first stage outlet (104) and wherein the second section (107) is connected to the first stage outlet (104) by a shoulder (118) and wherein said downstream end (111) of the first piston (108) is configured to abut said shoulder in the normally-open position; and
(b) the second section (127) of the second body (125) has a wider diameter than a diameter of the second stage outlet (124) and wherein the second section (127) is connected to the second stage outlet (124) by a second shoulder (138) and wherein said downstream end (131) of the second piston (128) is configured to abut said second shoulder (138) in the normally-open position.

8. The pressure regulator (100) according to any preceding claim, in which one or both of the first spring (113) and the second spring (133) are configured to bias the respective first and second piston (108, 128) in a direction the same as the direction of flow through the pressure regulator.

9. The pressure regulator (100) according to any preceding claim, in which, at least in the normally-open position,
pressure at the inlet aperture (103) when the pressure regulator is in use is configured to act over the first cross-sectional area of the upstream end (110) to apply a force in the same direction as that applied by the first (113); and
pressure in the first stage outlet (104) when the pressure regulator is in use is configured to act over the second cross-sectional area of the downstream end (111) of the first piston (111) to compress the first spring (113) and move the first valve member (112) towards the inlet aperture (103) to reduce a flow area through the inlet aperture (103).

10. The pressure regulator (100) according to claim 9, in which pressure at the second inlet aperture (123) when the pressure regulator is in use is configured to act over the first cross-sectional area of the upstream end (130) of the second piston to apply a force in the same direction as that applied by the second spring (133); and pressure in the second stage outlet (124) when the pressure regulator is in use is configured to act over the second cross-sectional area of the downstream end (121) of the second piston (121) to compress the second spring (133) and move the second valve member (132) towards the second inlet aperture (123) to reduce a flow area through the second inlet aperture (123).

11. The pressure regulator (100) according to any preceding claim, in which, the pressure regulator includes a one-way valve coupled to and upstream of said inlet aperture 103.

12. The pressure regulator (100) according to any preceding claim, in which the diameter of the flow passage (114, 134) through the first and/or second piston (108, 128) has a smaller diameter than the respective first stage outlet (104) or the respective second stage outlet (124).

13. The pressure regulator according to any preceding claim, in which one or both of:
a) the piston (108) is configured such that movement of the piston in an upstream direction relative to fluid flow through the pressure regulator is configured to move the first valve member (112) closer to the inlet aperture (103) to restrict flow through the inlet aperture; and
b) the second piston (128) is configured such that movement of the second piston in an upstream direction relative to fluid flow through the pressure regulator is configured to move the second valve member (132) closer to the second inlet aperture (123) to restrict flow through the second inlet aperture.

14. The pressure regulator according to any preceding claim, in which one or both of:
a) the first valve member, at least in the normally-open position, is downstream of a valve seat formed at a downstream side of the inlet aperture; and
b) the second valve member, at least in the normally-open position, is downstream of a valve seat formed at a downstream side of the second inlet aperture.

15. A fuel delivery system (400) for a fuel consuming device (403) comprising the pressure regulator of any preceding claim, wherein the inlet aperture is configured to be coupled to a pressurized fuel source (402) and the second stage outlet is configured to be coupled to the fuel consuming device (403), the pressure regulator configured to provide a fixed output pressure for said fuel consuming device.
